# EUROPÄISCHE PATENTSCHRIFT

(11) **EP 1 378 671 B1**
(45) Veröffentlichungstag und Bekanntmachung des Hinweises auf die Patenterteilung: **30.08.2006**
(21) Anmeldenummer: 03014925.6
(22) Anmeldetag: 01.07.2003
(51) Int. Cl.: F16B 35/04, F16B 35/00, H01R 4/36

(54) **Klemmschraube mit Klemmscheibe und zugehörige Klemmvorrichtung**
Clamping screw with clamping washer and associated clamping device
Vis de serrage avec rondelle de serrage et dispositif de serrage associé

(30) Priorität: 06.07.2002 DE 10230502
(43) Veröffentlichungstag der Anmeldung: 07.01.2004
(60) Teilanmeldung: 06007159.4
(73) Patentinhaber: Pfisterer Kontaktsysteme GmbH & Co. KG, 73650 Winterbach (DE)
(72) Erfinder: Frank, Erich, 73269 Hochdorf (DE)
(74) Vertreter: Bartels & Partner

(56) Entgegenhaltungen:
- DE-A- 3 512 888
- DE-U- 7 640 466
- FR-A- 913 427

## Beschreibung

Die Erfindung betrifft eine Klemmschraube zum Klemmen und elektrischen Kontaktieren einer Anschlußleitung, insbesondere einer feindrähtigen Transformator-Anschlußleitung, gemäß dem Oberbegriff des Anspruchs 1, sowie eine zugehörige Klemmvorrichtung.

Bei den bekannten Klemmschrauben, die beispielsweise einen sphärischen Endabschnitt aufweisen, besteht insbesondere beim Klemmen von feindrähtigen Anschlußleitungen das Problem, daß die feinen Drähte oder Litzendrähte der Anschlußleitung beim Eindrehen der Klemmschraube in die zugehörige Klemmvorrichtung verdreht und mithin beschädigt werden. Dadurch ist nicht nur die mechanische Klemmwirkung, sondern insbesondere die dauerhafte elektrische Kontaktierung negativ beeinträchtigt.

Aus der DE 76 40 466 U ist eine Klemmschraube nach dem Oberbegriff des Anspruchs 1 bekannt, bei welcher der biegesteif ausgebildete abtrennbare Klemmstückabschnitt eine dem Gewindeabschnitt zugewandte kegelförmige Anlagefläche aufweist. Die sich dadurch nach dem Abtrennen ergebende spitzwinklige Kante des Klemmstückabschnitts wird beim Anziehen der Klemmschraube derart plastisch verformt, daß sie in einen durch einen konischen Übergangsabschnitt gebildeten Hinterschnitt eingreift, und dadurch der Klemmstückabschnitt in der Art einer Nietverbindung unverlierbar an dem Gewindeabschnitt festgelegt ist.

Der Erfindung liegt daher die Aufgabe zugrunde, eine Klemmschraube und eine zugehörige Klemmvorrichtung bereitzustellen, mit der sowohl grobdrähtige Anschlußleitungen bis hin zu Volldrahtleitungen als auch insbesondere feindrähtige Anschlußleitungen mechanisch sicher und elektrisch dauerhaft kontaktiert werden können. Die Klemmschrauben sollen darüber hinaus kostengünstig herstellbar sein. Die erfindungsgemäße Klemmvorrichtung soll vielseitig einsetzbar sowie einfach in der Handhabung und Montage sein.

Diese Aufgabe ist durch die im Anspruch 1 bestimmte Klemmschraube sowie durch die im nebengeordneten Anspruch bestimmte Klemmvorrichtung gelöst. Besondere Ausführungsarten der Erfindung sind in den Unteransprüchen bestimmt.

Die Aufgabe ist bei einer Klemmschraube nach dem Oberbegriff des Anspruchs 1 dadurch gelöst, daß der abgetrennte Klemmstückabschnitt im wesentlichen die Form einer Ringscheibe aufweist, die unter Anlage an den Gewindeabschnitt im Bereich einer an dem Klemmstückabschnitt und/oder an dem Gewindeabschnitt angebrachten Fase tellerfederförmig verformbar ist. Dadurch ergibt sich eine die Klemmkraft und/oder Kontaktkraft speichernde Verformung des Klemmstückabschnittes und dadurch eine dauerhaft hohe Kontakt- und Klemmkraft. Diese Kraftspeicherwirkung kann bereits bei Verwendung eines üblichen Automatenstahls für die Klemmschraube erreicht werden.

Die Krafteinleitungsfläche ist dabei üblicherweise eine Werkzeugangriffsfläche, beispielsweise ein Innensechskant, ein Schlitz oder Kreuzschlitz, ein Außensechskant oder dergleichen. Vorzugsweise ragt die Krafteinleitungsfläche ein Stück weit in den Gewindeabschnitt hinein und/oder ist ohne einen Übergangsbereich auf der Außenfläche von dem Gewindeabschnitt ausgebildet. Der Außendurchmesser des Gewindeabschnitts weist vorzugsweise die größte Erstreckung in Radialrichtung der gesamten Klemmschraube auf. Der Außendurchmesser des Klemmstückabschnittes, der im wesentlichen scheibenförmig mit in Bezug auf die Längsachse endseitig planparallelen ersten und zweiten Anlageflächen sein kann, ist gleich groß oder etwas geringer als der Außendurchmesser des Gewindeabschnittes.

Vorzugsweise werden abisolierte Anschlußleitungen kontaktiert. Grundsätzlich kann jedoch die Klemmschraube, insbesondere der Klemmstückabschnitt, Schneidmittel aufweisen, mit denen eine auf der Anschlußleitung befindliche Isolation durchtrennbar ist. Das Abtrennen des Klemmstückabschnitts erfolgt vorzugsweise erst nach Durchtrennen der Isolation.

Beim die Anschlußleitung klemmenden Eindrehen der Klemmschraube in eine entsprechenden Gewindebohrung der Klemmvorrichtung kommt es zu einem Abtrennen des Klemmstückabschnittes von dem Gewindeabschnitt. Anschließend muß die Klemmschraube weiter angezogen werden.
Zur Vermeidung von Beschädigungen insbesondere feindrähtiger Anschlußleitungen ist es von Vorteil, wenn sich beim weiteren Eindrehen des Gewindeabschnitts der Klemmstückabschnitt nicht mehr im selben Maße dreht wie der Gewindeabschnitt, vorzugsweise im wesentlichen gar keine Drehbewegung mehr ausführt. Erfindungsgemäß wird dies dadurch erreicht, daß unter Berücksichtigung der Reibungskoeffizienten zwischen dem Klemmstückabschnitt und dem Gewindeabschnitt einerseits und der zu kontaktierenden Anschlußleitung andererseits die wirksame Reibfläche, die durch entsprechende Anlageflächen gebildet ist, so angeordnet sind, daß die von der im wesentlichen feststehenden Anschlußleitung auf den Klemmstückabschnitt eingeleiteten Kräfte ein höheres Drehmoment bewirken, als die von dem Gewindeabschnitt auf den Klemmstückabschnitt eingeleiteten Kräfte.

In einer besonderen Ausführungsart der Erfindung wird insbesondere dann, wenn die Reibungskoeffizienten zwischen Klemmstückabschnitt und Gewindeabschnitt einerseits und Klemmstückabschnitt und zu kontaktierender Anschlußleitung andererseits im wesentlichen gleich sind, werden die gewünschten unterschiedlichen Drehmomente dadurch erreicht, daß die erste Anlagefläche des Klemmstückabschnitts radial weiter innen liegt als die zweite Anlagefläche. Üblicherweise sind diese Anlageflächen ringförmig ausgebildet, insbesondere kreisringförmig.
Die wirksamen Reibkräfte können auch durch die Wahl der Werkstoffe, eine Oberflächenbehandlung der Anlageflächen und/oder durch Verwendung von Schmierstoffen beeinflußt werden.

In einer besonderen Ausführungsart der Erfindung ist die erste Anlagefläche radial außenseitig begrenzt durch die Fase an dem Gewindeabschnitt und/oder an dem Klemmstückabschnitt. Der Winkel zwischen der Fase und der verbleibenden Anlagefläche kann dabei wenige Grad betragen. Vorteilhaft in diesem Zusammenhang ist, wenn die radial äußere Begrenzung der Anlagefläche definiert ist.

In einer besonderen Ausführungsart der Erfindung ist im einstückigen Zustand der Klemmstückabschnitt mittels eines Übergangsabschnitts unter Ausformung einer Sollbruchstelle mit dem Gewindeabschnitt verbunden. Beispielsweise kann der Übergangsabschnitt eine zylindrische, insbesondere kreiszylindrische Außenumfangsfläche aufweisen. Weiterhin vorteilhaft ist, wenn beim Abtrennen des Klemmstückabschnitts der Übergangsabschnitt an der Sollbruchstelle einen Hinterschnitt ausbildet, der von einem an der Sollbruchstelle gebildeten Kragen des abgetrennten Klemmstückabschnitts hintergreifbar ist. Dadurch ist der Klemmstückabschnitt auch nach dem Abtrennen unverlierbar an der Klemmschraube festgelegt, wenngleich frei gegenüber dem Gewindeabschnitt drehbar.

In einer besonderen Ausführungsart der Erfindung ist im einstückigen Zustand der Übergangsabschnitt durch eine in Bezug auf die Längsachse eingebrachte, vorzugsweise symmetrische oder sogar ringförmige Nut gebildet. Dadurch lassen sich derartige Klemmschrauben besonders einfach und automatisierbar herstellen. Die Nut ist beispielsweise auf einer Drehbank mit einem Formmeißel einstechbar.

In einer besonderen Ausführungsart der Erfindung weist der Klemmstückabschnitt im einstückigen Zustand der Klemmschraube auf seiner der zu kontaktierenden Anschlußleitung zugewandten Fläche eine Ausnehmung auf, deren Durchmesser im Bereich der Sollbruchstelle größer ist als der Außendurchmesser des Übergangsabschnittes im Bereich der Sollbruchstelle. Diese Ausnehmung kann beispielsweise rotationssymmetrisch in Bezug auf die Längsachse der Klemmschraube sein. Besonders einfach kann diese Ausnehmung durch eine entsprechende Sacklochbohrung gebildet sein, die in eine Stirnfläche der Klemmschraube an ihrem Klemmstückabschnittsende gebildet sein.

In einer besonderen Ausführungsart der Erfindung ragt im abgetrennten Zustand der Übergangsabschnitt in Richtung auf die zu kontaktierende Anschlußleitung nicht über den Klemmstückabschnitt hinaus. Dadurch ist verhindert, daß beim Anziehen des Gewindeabschnitts der sich mitdrehende Übergangsabschnitt die zu kontaktierende Anschlußleitung verdreht oder beschädigt. Beispielsweise kann hierzu die Erstreckung der Nut in Richtung der Längsachse der Klemmschraube geringer gewählt werden als die Erstreckung des Klemmstückabschnittes in dieser Richtung.

Besonders vorteilhaft im Hinblick auf die Herstellung ist eine Ausführungsart der Erfindung, bei der im einstückigen Zustand die Klemmschraube rotationssymmetrisch in Bezug auf die Längsachse ist. Dadurch lassen sich alle wesentlichen Fertigungsschritte auf einer Drehbank ausführen.

Die vorliegende Erfindung betrifft auch eine Vorrichtung zum Klemmen und elektrischen Kontaktieren einer Anschlußleitung, insbesondere einer feindrähtigen Transformator-Anschlußleitung mit einem Klemmenkörper, der mindestens eine Öffnung zum Einschrauben einer erfindungsgemäßen Klemmschraube aufweist, und mit einer erfindungsgemäßen Klemmschraube. Der Klemmenkörper weist vorzugsweise einstückig ausgebildet eine Gegenlagerfläche für die Anlage der zu kontaktierenden Anschlußleitung auf. In einer besonderen Ausführungsart der Erfindung ist die Öffnung größer als der Klemmstückabschnitt der Klemmschraube.

In einer besonderen Ausführungsart der Erfindung weist die Klemmvorrichtung mindestens zwei einander zugeordnete und miteinander verbundene Öffnungen auf, die jeweils für ein Einschrauben der Klemmschraube geeignet sind, insbesondere jeweils ein entsprechendes Gewinde aufweisen. Die zu klemmende Anschlußleitung kann wahlweise in die eine oder andere Öffnung eingesteckt werden, wobei die zugehörige Klemmschraube in die freigebliebene Öffnung eingeschraubt werden kann und dadurch die Anschlußleitung elektrisch kontaktiert und geklemmt werden kann. Vor dem Einschrauben kann über die zweite Öffnung auch die korrekte Lage der Anschlußleitung kontrolliert werden, insbesondere ob die Anschlußleitung ausreichend weit eingeschoben ist, damit eine gute Kontaktierung und Klemmung gewährleistet ist.

Vorzugsweise sind die beiden einander zugeordneten Öffnungen rechtwinklig angeordnet. Dadurch kann beispielsweise die zu klemmende Anschlußleitung wahlweise horizontal oder vertikal zu der Klemmvorrichtung zugeführt werden. Der Klemmstückabschnitt drückt rechtwinklig auf die Anschlußleitung, wodurch Einzeladern der Anschlußleitung weder aus der Bohrung axial herausgeschoben werden noch radial verdrängt werden. Durch das in der Öffnung vorhandene Gewinde ist eine qualitativ hochwertige und dauerhafte elektrische Kontaktierung auch bei verschmutzten oder oxidierten Leitern gewährleistet.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine Seitenansicht einer erfindungsgemäßen Klemmschraube,
- Fig. 2: zeigt die Klemmschraube der Fig. 1 im Querschnitt,
- Fig. 3: zeigt in vergrößerter Darstellung einen Ausschnitt der Klemmschraube der Fig. 2 im Bereich lll,
- Fig. 4: zeigt die Klemmschraube mit von dem Übergangsabschnitt abgetrennten Klemmstückabschnitt,
- Fig. 5: zeigt eine sich beim weiteren Eindrehen der Klemmschraube sich ergebende Verformung des Klemmstückabschnittes,
- Fig. 6: zeigt eine erfindungsgemäße Vorrichtung zum Klemmen und elektrischen Kontaktieren einer Anschlußleitung,
- Fig. 7: zeigt ein zweites Ausführungsbeispiel einer erfindungsgemäßen Klemmvorichtung,
- Fig. 8: zeigt die Klemmvorrichtung der Fig. 7 aus einer anderen Perspektive, und
- Fig. 9: zeigt ein drittes Ausführungsbeispiel einer erfindungsgemäßen Klemmvorichtung.

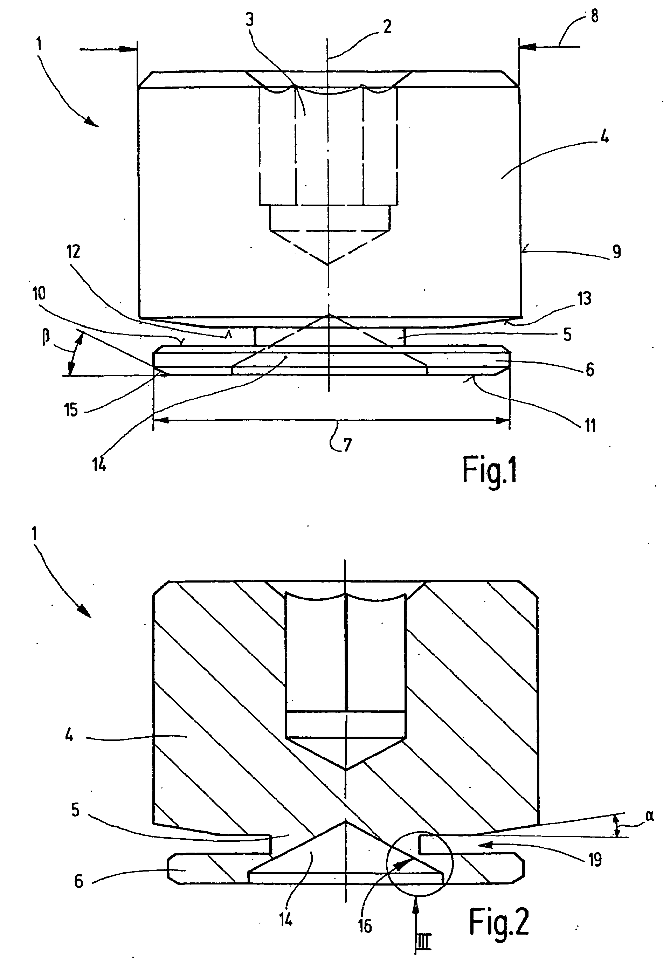

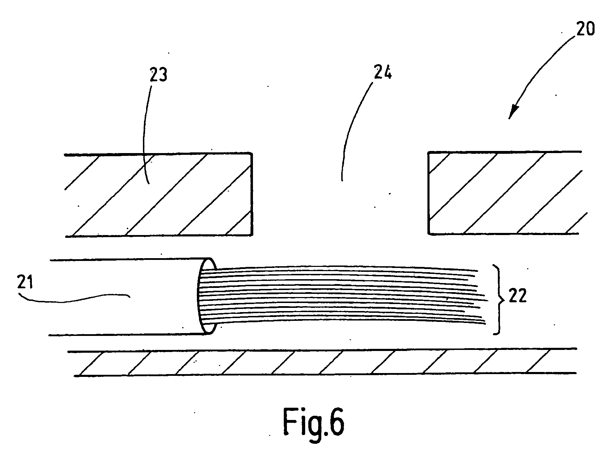

Die Fig. 1 zeigt eine Seitenansicht einer erfindungsgemäßen Klemmschraube 1. An ihrem von der Anschlußleitung 21 (Fig. 6) abgewandten Ende weist die Klemmschraube 1 als Krafteinleitungsfläche 3 eine in Bezug auf die Längsachse 2 symmetrische und zylindrische Bohrung auf, die mindestens abschnittsweise im Querschnitt ein Sechseck bildet zum Einsetzen eines entsprechenden Schlüsselwerkzeuges.

Einstückig bildet die Klemmschraube 1 einen Gewindeabschnitt 4, einen Übergangsabschnitt 5 sowie einen Klemmstückabschnitt 6 aus. Wie in den nachfolgenden Figuren noch dargestellt, ist der Klemmstückabschnitt 6 beim Klemmen der Anschlußleitung abtrennbar. Der Außendurchmesser 7 des Klemmstückabschnitts 6 ist etwas geringer als der Außendurchmesser 8 des Gewindeabschnitts 4, der auf seiner Außenumfangsfläche beispielsweise ein metrisches Gewinde der Größe M 26 X 1,5 aufweist. Typische Werte für den Außendurchmesser 7 des Klemmstückabschnitts 6 betragen in diesem Fall etwa 24 mm, wodurch die Montage der Klemmschraube vereinfacht ist.

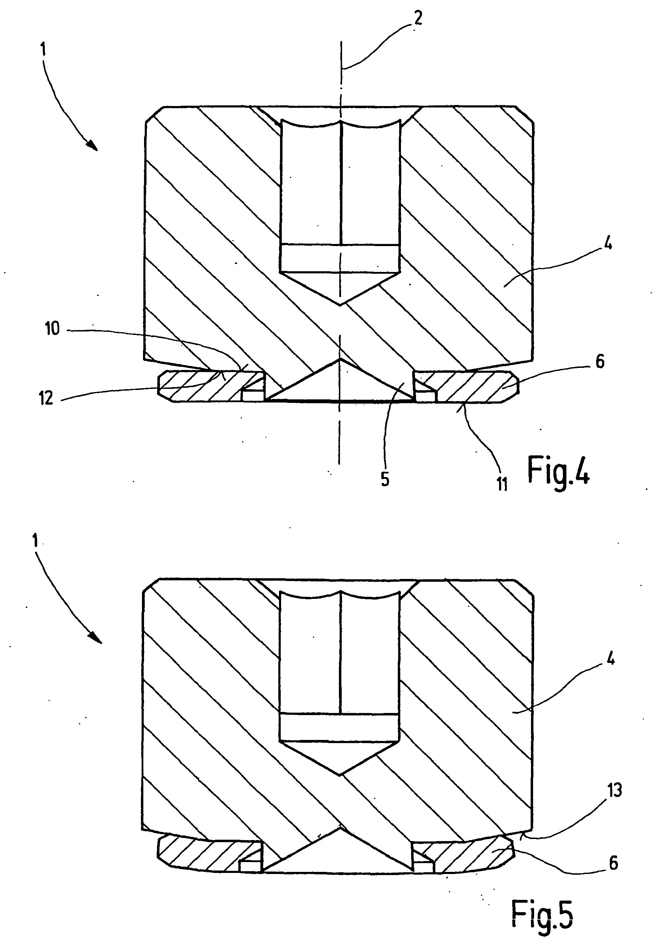

Der Klemmstückabschnitt 6 hat im wesentlichen die Form einer Scheibe mit in Bezug auf die Längsachse 2 endseitig planparallelen ersten und zweiten Anlageflächen 10, 11. Die erste Anlagefläche 10 ist dem Gewindeabschnitt 4 zugeordnet und korrespondiert mit einer von dem Gewindeabschnitt 4 ausgebildeten Reibschlußfläche 12, die sich ausgehend von dem Übergangsabschnitt 5 einen gewissen Betrag planparallel zur ersten Anlagefläche 10 in radialer Richtung erstreckt. Anschließend geht die Reibschlußfläche 12 in eine erste Fase 13 über, die mit der Längsachse 12 einen spitzen Winkel von beispielsweise 80° einschließt. Radial außenseitig geht die erste Fase 13 in die das Gewinde 9 tragende Außenumfangsfläche des Gewindeabschnitts 4 über. Wie insbesondere in der nachfolgend beschriebenen Fig. 4 dargestellt ist, wird die Krafteinleitung von dem Gewindeabschnitt 4 in den abgetrennten Klemmstückabschnitt 6 im wesentlichen von der Reibschlußfläche 12 bestimmt.

Auf seiner der zu kontaktierenden Anschlußleitung 21 zugeordneten zweiten Anlagefläche 11 weist der Klemmstückabschnitt eine in Bezug auf die Längsachse 2 zentrische Ausnehmung 14 auf, deren Kegelform sich bis in den Gewindeabschnitt 4 hinein erstreckt. Die außenseitigen Kanten des Klemmstückabschnitts 6 weisen jeweils eine zweite Fase 15 auf mit einem typischen Fasenwinkel β von etwa 30°.

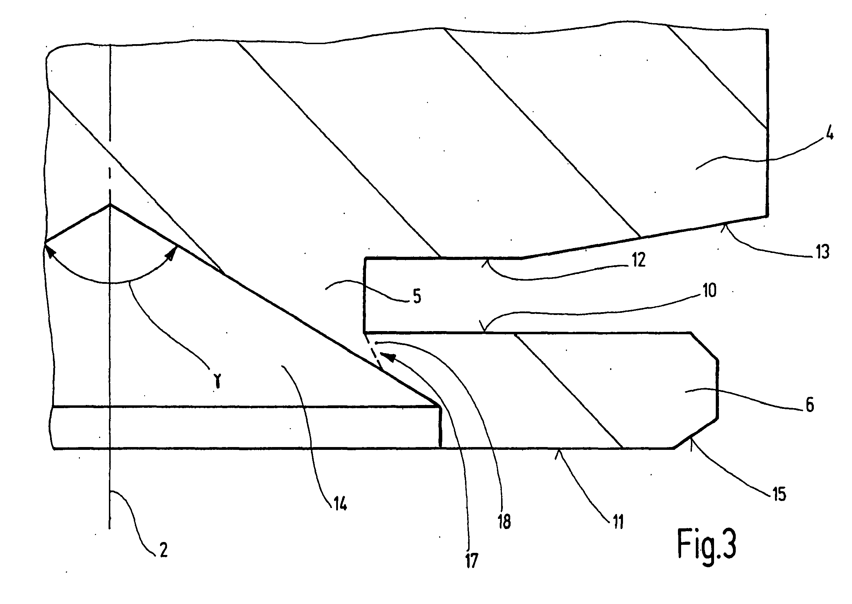

Die Fig. 2 zeigt die Klemmschraube 1 der Fig. 1 im Querschnitt. In dem mit einem Kreis markierten und in der Fig. 3 vergrößert dargestellten Bereich bildet sich eine Sollbruchstelle 16 zwischen dem Übergangsabschnitt 5 und dem Klemmstückabschnitt 6 aus.

Die Fig. 3 zeigt in vergrößerter Darstellung einen Ausschnitt der Klemmschraube 1 der Fig. 2 im Bereich III. Die sich beim Abtrennen des Klemmstückabschnitts 6 von dem Übergangsabschnitt 5 ergebende Trennlinie 17 ist in der Fig. 3 gestrichelt dargestellt. Die Erstreckung dieser Trennlinie 17 in radialer Richtung in Bezug auf die Längsachse 2 hängt unter anderem von dem Kegelwinkel y und der Erstreckung der Ausnehmung 14 in Richtung der Längsachse 2 ab. In jedem Fall ist die Trennlinie 17 derart verlaufend, daß der Übergangsabschnitt 5 an der Sollbruchstelle 16 einen Hinterschnitt ausbildet, der von dem an der Sollbruchstelle 16 durch die Trennlinie 17 gebildeten und in der Regel ringförmigen Kragen 18 des abgetrennten Klemmstückabschnitts 6 hintergreifbar ist. Dadurch ist auch im abgetrennten Zustand der Klemmstückabschnitt 6 unverlierbar an der Klemmschraube 1 festgelegt, aber frei um diese und insbesondere den Übergangsabschnitt 5 drehbar.

Herstellungstechnisch besonders einfach kann der Übergangsabschnitt 5 durch Einformen einer in Bezug auf die Längsachse 2 symmetrische und ringförmige Nut 19 gebildet sein.

Die Fig. 4 zeigt die Klemmschraube 1 mit von dem Übergangsabschnitt 5 abgetrennten Klemmstückabschnitt 6. Erkennbar ist auch die Anlage der ersten Anlagefläche 10 des Klemmstückabschnitts 6 an der Reibschlußfläche 12 des Gewindeabschnitts 4. Erkennbar ist auch, daß die Krafteinleitung von dem mittels eines Werkzeugs drehbaren Gewindeabschnitt 4 auf den Klemmstückabschnitt 6 radial in Bezug auf die Längsachse 2 weiter innen erfolgt als die Einleitung der Kraft von der im wesentlichen feststehenden Anschlußleitung 21 (Fig. 6) auf die zweite Anlagefläche 11 des Klemmstückabschnitts 6.

Die Fig. 5 zeigt eine sich beim weiteren Eindrehen der Klemmschraube 1 ergebende Verformung des Klemmstückabschnittes 6. Dabei kommt es auch zu einer jedenfalls teilweisen Anlage der ersten Anlagefläche 10 des Klemmstückabschnittes 6 an die erste Fase 13 des Gewindeabschnitts 4. Diese Anlage geht mit einer signifikanten Erhöhung der Betätigungskraft für das Eindrehen der Klemmschraube einher und kann daher als Endpunkterkennung für das Eindrehen verwendet werden. Der sich verformende Klemmstückabschnitt 6 speichert dabei eine die klemmende und kontaktierende Wirkung dauerhaft gewährleistende Kraft, was insbesondere beim Auftreten von Temperaturschwankungen und damit einhergehenden Geometrieänderungen besonders vorteilhaft ist.
Für typische Anwendungsfälle beträgt der zu übertragenden Strom beispielsweise zwischen 50 und 2.000 Ampere Dauerbelastung, insbesondere etwa 750 Ampere, und Kurzschlußbelastungen bis zu mehreren 10.000 Ampere.

Die Fig. 6 zeigt eine erfindungsgemäße Vorrichtung 20 zum Klemmen und elektrischen Kontaktieren einer Anschlußleitung 21, insbesondere einer Transformatoranschlußleitung mit einer Vielzahl von feinen Anschlußdrähten 22, die beispielsweise einen Durchmesser zwischen 0,1 und 1,0 mm aufweisen, insbesondere 0,2 bis 0,5 mm, und typisch etwa 0,4 mm. Der Klemmenkörper 23 weist mindestens eine Öffnung 24 mit einem mindestens kreisbogenförmigen Innengewinde zum Einschrauben einer erfindungsgemäßen Klemmschraube 1 auf. Die Montage ist besonders vorteilhaft, wenn die Öffnung 24 kreiszylindrisch ist mit einem Durchmesser, der größer ist als der Durchmesser des Klemmstückabschnitts 6 der Klemmschraube 1.

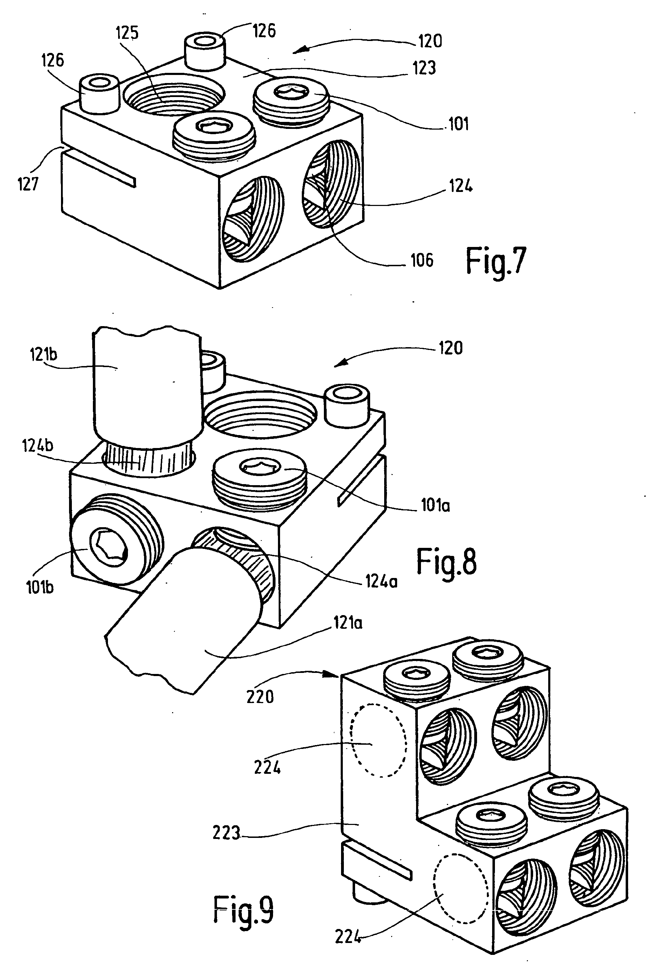

Die Fig. 7 zeigt ein zweites Ausführungsbeispiel einer erfindungsgemäßen Klemmvorrichtung 120 in einer perspektivischen Ansicht. Der Klemmenkörper 123 weist insgesamt vier Öffnungen 124 auf, die jeweils paarweise rechtwinklig zueinander angeordnet sind. Alle Öffnungen 124 weisen ein übereinstimmendes Innengewinde auf zum Eindrehen einer Klemmschraube 101, die im dargestellten Ausführungsbeispiel eine Innensechskantbohrung für den Werkzeugangriff aufweist. Im dargestellten Ausführungsbeispiel ist jeweils in die vertikale Öffnung 124 eine Klemmschraube 101 eingeschraubt, wobei der zugehörige Klemmstückabschnitt 106 einen nur geringfügig kleineren Durchmesser aufweist als die lichte Weite der Öffnung 124. Dadurch ist eine möglichst ganzflächige Kontaktierung und Klemmung der Anschlußleitung 121 gewährleistet.

Gleich beabstandet von den beiden für die Klemmschraube 101 vorgesehenen Öffnungen124 weist der Klemmenkörper 123 eine parallel hierzu ausgerichtete Gewindebohrung 125 auf, die entweder ausschließlich für die mechanische Befestigung des Klemmenkörpers 123 an einer. Einrichtung dienen kann, oder vorzugsweise auch für die elektrische Kontaktierung einer Einrichtung wie beispielsweise eines Transformator-Anschlußbolzens. Nach Aufschrauben des Klemmenkörpers 123 auf einen entsprechenden Gewindebolzen und Ausrichtung des Klemmenkörpers 123 in Bezug auf die anzuschließenden Anschlußleitungen (121a, 121b) kann durch Zudrehen der Fixierschrauben126 in Zusammenwirkung mit dem Klemmschlitz 127 der Klemmenkörper 123 und mithin die Klemmvorrichtung 120 an dem Gewindebolzen festgelegt werden.

Alternativ oder ergänzend zu dieser Befestigungsmethode kann der Klemmenkörper 123 auch nur auf einen Bolzen bis zu einer gegebenenfalls auch einstellbaren Anlagefläche aufgesteckt werden und anschließend beispielsweise mit einer auf ein Außengewinde des Bolzens aufschraubbaren Mutter befestigt werden. In diesem Fall kann anstelle der Gewindebohrung 125 eine einfache Durchgangsbohrung verwendet werden.

Die Fig. 8 zeigt die Klemmvorrichtung 120 der Fig. 7 aus einer anderen Perspektive und mit geklemmten Anschlußleitungen 121a, 121b. Während für die erste Anschlußleitung121a in die horizontal ausgerichtete Öffnung 124a eingesteckt ist und durch die in die korrespondierende vertikale Öffnung eingeschraubte Klemmschraube 101a geklemmt wurde, ist die zweite Anschlußleitung 121b in die vertikal ausgerichtete Öffnung 124b eingesteckt und durch die in die korrespondierende horizontale Öffnung eingeschraubte Klemmschraube 101b geklemmt.

Grundsätzlich ist es möglich, die erfindungsgemäße Klemmvorrichtung 120 nicht nur als Anschlußklemme beispielsweise für einen Transformator zu verwenden, sondern auch als Verbindungsklemme für die beiden Anschlußleitungen 121a, 121b.

Die Fig. 9 zeigt ein drittes Ausführungsbeispiel einer erfindungsgemäßen Klemmvorrichtung 220. Diese unterscheidet sich gegenüber dem in den Fig. 7 und 8 dargestellten zweiten Ausführungsbeispiel im wesentlichen durch die treppenartige Anordnung von insgesamt vier Klemmpositionen. Alle vier zu klemmenden Anschlußleitungen können horizontal oder vertikal zugeführt werden. Dadurch ergeben sich größtmögliche Freiheiten bei der Montage der Klemmvorrichtung 220 bzw. bei der Zuführung der Anschlußleitungen. Die in der Fig. 9 nicht sichtbare Gewindebohrung zum Befestigen der Klemmvorrichtung 220 beispielsweise an einem Transformator-Anschlußbolzen ist in diesem Ausführungsbeispiel auf der Unterseite als Sacklochbohrung ausgeführt. In einer weiteren Ausgestaltung der Erfindung wäre auch eine dritte, in der Fig. 9 nur punktiert angedeutete Öffnung an den Stirnseiten des Klemmkörpers 223 möglich, die einen weiteren Freiheitsgrad betreffend die Zuführung der Anschlußleitungen bereitstellen würde.

Durch die Verwendung der erfindungsgemäßen Klemmschrauben 1, 101 ist gewährleistet, daß auch ein aus dünnen Einzeldrähten bestehender Leiter während des Einschraub- und Klemmvorgangs nur geklemmt, aber beispielsweise nicht verschoben oder abgeschert wird. Durch die flächige Pressung der Einzeladern bleibt der Gesamtverband des Leiterseiles an der Klemmstelle im wesentlichen erhalten. Es kann daher auf die Verwendung von Adernendhülsen verzichtet werden, die bei ähnlichen Klemmen aus dem Stand der Technik jeweils über den abisolierten Leiter gestülpt werden müssen. Daher entfällt auch das Vorhalten und Mitsichführen entsprechender Adernendhülsen bei der Montage, die außerdem immer in der passenden Querschnittsgröße vorgehalten werden müssen.

## Patentansprüche

1. Klemmschraube (1) zum Klemmen und elektrischen Kontaktieren einer Anschlußleitung (21), insbesondere einer feindrähtigen Transformator-Anschlußleitung, mit einer Krafteinleitungsfläche (3) sowie einem um eine Längsachse (2) drehbaren Gewindeabschnitt (4) und einem Klemmstückabschnitt (6), die im Ausgangszustand einstückig ausgebildet sind, wobei beim Klemmen der Anschlußleitung (21) der Klemmstückabschnitt (6) abtrennbar ist und mittels einer ersten, dem Gewindeabschnitt (4) zugewandten Anlagefläche (10) und einer zweiten, der Anschlußleitung (21) zugewandten Anlagefläche (11) in klemmende Anlage an der zu kontaktierenden Anschlußleitung (21) haltbar ist, und wobei die erste Anlagefläche (10) des Klemmstückabschnitts (6) gegenüber der zweiten Anlagefläche (11) unter Berücksichtigung der Reibungskoeffizienten zwischen Klemmstückabschnitt (6) und Gewindeabschnitt (4) einerseits und Klemmstückabschnitt (6) und zu kontaktierender Anschlußleitung (21) andererseits in Bezug auf die Längsachse (2) radial so angeordnet ist, daß nach dem Abtrennen des Klemmstückabschnitts (6) beim weiteren Drehen des Gewindeabschnitts (4) die Relativdrehbewegung des Gewindeabschnitts (4) gegenüber dem Klemmstückabschnitt (6) größer ist als die Relativdrehbewegung des Klemmstückabschnitts (6) gegenüber der zu kontaktierenden Anschlußleitung (21), **dadurch gekennzeichnet, daß** der abgetrennte Klemmstückabschnitt (6) im wesentlichen die Form einer Ringscheibe aufweist, die unter Anlage an den Gewindeabschnitt (4) im Bereich einer an dem Klemmstückabschnitt (6) und/oder an dem Gewindeabschnitt (4) angebrachten Fase (13) tellerfederförmig verformbar ist.

2. Klemmschraube (1) nach Anspruch 1, **dadurch gekennzeichnet, daß** die für den Reibschluß mit dem Gewindeabschnitt (4) wirksame erste Anlagefläche (10) des Klemmstückabschnitts (6) radial weiter innen liegt als die für den Reibschluß mit der Anschlußleitung (21) wirksame zweite Anlagefläche (11).

3. Klemmschraube (1) nach Anspruch 1 oder 2, **dadurch gekennzeichnet, daß** die erste Anlagefläche (10) radial außenseitig durch die Fase (13) an dem Klemmstückabschnitt (6) und/oder an dem Gewindeabschnitt (4) begrenzt ist.

4. Klemmschraube (1) nach einem der Ansprüche 1 bis 3, **dadurch gekennzeichnet, daß** im einstückigen Zustand der Klemmstückabschnitt (6) mittels eines Übergangsabschnitts (5) unter Ausformung einer Sollbruchstelle (16) mit dem Gewindeabschnitt (4) verbunden ist, und daß beim Abtrennen des Klemmstückabschnitts (6) der Übergangsabschnitt (5) an der Sollbruchstelle (16) einen Hinterschnitt aufweist, der von einem an der Sollbruchstelle (16) gebildeten Kragen (18) des abgetrennten Klemmstückabschnitts (6) hintergreifbar ist.

5. Klemmschraube (1) nach Anspruch 4, **dadurch gekennzeichnet, daß** im einstückigen Zustand der Übergangsabschnitt (5) durch eine in Bezug auf die Längsachse (2) radial eingebrachte, insbesondere symmetrische oder sogar ringförmige Nut (19) gebildet ist.

6. Klemmschraube (1) nach Anspruch 4 oder 5, **dadurch gekennzeichnet, daß** im einstückigen Zustand der Klemmstückabschnitt (6) auf seiner der zu kontaktierenden Anschlußleitung (21) zugewandten zweiten Anlagefläche (11) eine Ausnehmung (14) aufweist, deren Durchmesser im Bereich der Sollbruchstelle (16) größer ist als der Außendurchmesser des Übergangsabschnittes (5) im Bereich der Sollbruchstelle (16).

7. Klemmschraube (1) nach einem der Ansprüche 4 bis 6, **dadurch gekennzeichnet, daß** im abgetrennten Zustand der Übergangsabschnitt (5) in Richtung auf die zu kontaktierende Anschlußleitung (21) nicht über den Klemmstückabschnitt (6) hinausragt.

8. Klemmschraube (1) nach einem der Ansprüche 1 bis 7, **dadurch gekennzeichnet, daß** im einstückigen Zustand die Klemmschraube (1) abgesehen vom Gewinde (9) rotationssymmetrisch in Bezug auf die Längsachse (2) ist.

9. Vorrichtung (20) zum Klemmen und elektrischen Kontaktieren einer Anschlußleitung (21), insbesondere einer feindrähtigen Transformator-Anschlußleitung, mit einem Klemmenkörper (23) und mit einer Klemmschraube (1) nach einem der Ansprüche 1 bis 8, wobei der Klemmenkörper (23) mindestens eine Öffnung (24) zum Einschrauben der Klemmschraube (1) aufweist.

10. Vorrichtung (120) nach Anspruch 9, **dadurch gekennzeichnet, daß** der Klemmenkörper (123) mindestens zwei, vorzugsweise rechtwinklig zueinander angeordnete Öffnungen (124) aufweist, die beide für ein Einschrauben der Klemmschraube (1) geeignet sind, wobei in eine erste Öffnung (124) die Anschlußleitung (121) einführbar ist und dort mittels der in die zweite Öffnung eingeschraubten Klemmschraube (1) klemmbar ist.

## Claims

1. Clamping screw (1) for clamping and electrically contacting a connection line (21), especially a fine-stranded transformer connection line, having a force transmission surface (3), and having a threaded portion (4), which is rotatable about a longitudinal axis (2), and a clamping element portion (6) which in the original state are formed in one piece, wherein, upon clamping of the connection line (21), the clamping element portion (6) is separable and can be held by means of a first contact surface (10) facing towards the threaded portion (4) and a second contact surface (11) facing towards the connection line (21) in clamping contact against the connection line (21) to be contacted, and wherein, having regard for the coefficients of friction between clamping element portion (6) and threaded portion (4) on the one hand and between clamping element portion (6) and connection line (21) to be contacted on the other hand, the first contact surface (10) of the clamping element portion (6) is arranged relative to the second contact surface (11) radially with respect to the longitudinal axis (2) in such a manner that, after separation of the clamping element portion (6), as the threaded portion (4) rotates further the relative rotational movement of the threaded portion (4) relative to the clamping element portion (6) is greater than the relative rotational movement of the clamping element portion (6) relative to the connection line (21) to be contacted, **characterised in that** the separated clamping element portion (6) is substantially in the shape of an annular washer which is deformable into the shape of a Belleville spring washer to rest against the threaded portion (4) in the region of a chamfer (13) provided on the clamping element portion (6) and/or on the threaded portion (4).

2. Clamping screw (1) according to claim 1, **characterised in that** the first contact surface (10) of the clamping element portion (6) effective for the frictional engagement with the threaded portion (4) is radially further inward than the second contact surface (11) effective for the frictional engagement with the connection line (21).

3. Clamping screw (1) according to claim 1 or claim 2, **characterised in that** the first contact surface (10) is radially outwardly defined by the chamfer (13) on the clamping element portion (6) and/or on the threaded portion (4).

4. Clamping screw (1) according to any one of claims 1 to 3, **characterised in that**, in the one-piece state, the clamping element portion (6) is connected to the threaded portion (4) by means of a transition portion (5) with a predetermined breaking site (16) being formed, and, upon separation of the clamping element portion (6), the transition portion (5) has at the predetermined breaking site (16) an undercut (5) behind which a collar (18), formed at the predetermined breaking site (16), of the separated clamping element portion (6) is able to engage.

5. Clamping screw (1) according to claim 4, **characterised in that**, in the one-piece state, the transition portion (5) is formed by a groove (19) made radially with respect to the longitudinal axis (2), especially a symmetrical or even annular groove (19).

6. Clamping screw (1) according to claim 4 or claim 5, **characterised in that**, in the one-piece state, the clamping element portion (6) has on its second contact surface (11) facing towards the connection line (21) to be contacted a recess (14) the diameter of which in the region of the predetermined breaking site (16) is greater than the outside diameter of the transition portion (5) in the region of the predetermined breaking site (16).

7. Clamping screw (1) according to any one of claims 4 to 6, **characterised in that**, in the separated state, the transition portion (5) does not project beyond the clamping element portion (6) in the direction towards the connection line (21) to be contacted.

8. Clamping screw (1) according to any one of claims 1 to 7, **characterised in that**, in the one-piece state, the clamping screw (1) apart from the thread (9) is rotationally symmetrical with respect to the longitudinal axis (2).

9. Device (20) for clamping and electrically contacting a connection line (21), especially a fine-wired transformer connection line, having a clamping body (23) and having a clamping screw (1) according to any one of claims 1 to 8, wherein the clamping body (23) has at least one opening (24) for screwing-in of the clamping screw (1).

10. Device (120) according to claim 9, **characterised in that** the clamping body (123) has at least two openings (124) which are preferably arranged at right angles to each other and both of which are suitable for screwing-in of the clamping screw (1), wherein the connection line (121) can be inserted into a first opening (124) and can be clamped there by means of the clamping screw (1) which is screwed into the second opening.

## Revendications

1. Vis de blocage (1) pour bloquer une ligne de raccordement (21) et en assurer le contact électrique, en particulier une ligne de raccordement à fil fin d'un transformateur, comportant une surface applicatrice de force (3) ainsi qu'une portion filetée (4) qui peut tourner autour d'un axe longitudinal (2) et une portion de pièce bloquante (6) qui forment toutes deux une seule pièce à l'état initial, dans laquelle la portion de pièce bloquante (6) peut être séparée quand on bloque la ligne de raccordement (21) et, à l'aide d'une première surface d'application (10) orientée vers la portion filetée (4), et d'une deuxième surface d'application (11), orientée vers la ligne de raccordement (21), peut être maintenue en contact bloquant contre la ligne de raccordement (21) à contacter, et dans laquelle en tenant compte du coefficient de frottement entre la portion de pièce bloquante (6) et la portion filetée (4) d'une part et entre la portion de pièce bloquante (6) et la ligne de raccordement (21) à contacter d'autre part, la première surface d'application (10) de la portion de pièce bloquante (6) est disposée radialement par rapport à l'axe longitudinal (2) en face de la deuxième surface d'application (11) de telle manière que, après que la portion de pièce bloquante (6) a été séparée quand on continue de tourner la portion filetée (4), la rotation relative de la portion filetée (4) par rapport à la portion de pièce bloquante (6) est plus grande que la rotation relative de la portion de pièce bloquante (6) par rapport à la ligne de raccordement (21) à contacter,
**caractérisée en ce que** séparée la portion de pièce bloquante (6) a pratiquement la forme d'une rondelle qui peut être déformée sous forme de ressort à disques en la plaçant contre la portion filetée (4) dans la zone d'un biseau (13) appliqué sur la portion de pièce bloquante (6) et/ou sur la portion filetée (4).

2. Vis de blocage (1) selon la revendication 1, **caractérisée en ce que** la première surface d'application (10) active pour la fermeture par frottement avec la portion filetée (4) se trouve radialement plus à l'intérieur que la deuxième surface d'application (11) active pour la fermeture par frottement avec la ligne de raccordement (21).

3. Vis de blocage (1) selon la revendication 1 ou 2, **caractérisée en ce que**, sur la portion de pièce bloquante (6) et/ou sur la portion filetée (4), la première surface d'application (10) est délimitée radialement vers l'extérieur par le biseau (13).

4. Vis de blocage (1) selon l'une des revendications 1 à 3, **caractérisée en ce que**, quand elle forme une seule pièce, la portion de pièce bloquante (6) est reliée à la portion filetée (4) par une portion de passage (5) en formant un point destiné à la rupture (16) et, quand on sépare la portion de pièce bloquante (6), la portion de passage (5) présente au point destiné à la rupture (16) une contre dépouille que peut saisir de l'arrière un collet (18), de la portion de pièce bloquante (6) séparée, qui est formé sur le point destiné à la rupture (6).

5. Vis de blocage (1) selon la revendication 4, **caractérisée en ce que**, quand elle forme une seule pièce, la portion de passage (5) est formée par une rainure (19), en particulier symétrique ou même annulaire, pratiquée radialement par rapport à l'axe longitudinal (2).

6. Vis de blocage (1) selon la revendication 4 ou 5, **caractérisée en ce que**, quand elle forme une seule pièce, la portion de pièce bloquante (6) présente, sur sa deuxième surface d'application (11) orientée vers la ligne de raccordement (21) à contacter, un creux (14) dont le diamètre dans la zone du point destiné à la rupture (16) est plus grand que le diamètre extérieur de la portion de passage (5) dans la zone du point destiné à la rupture (16).

7. Vis de blocage (1) selon l'une des revendications 4 à 6, **caractérisée en ce que**, quand elle est séparée, la portion de passage (5) ne dépasse pas de la portion de pièce bloquante (6) en direction de la ligne de raccordement (21) à contacter.

8. Vis de blocage (1) selon l'une des revendications 1 à 7, **caractérisée en ce que**, quand elle forme une seule pièce, la vis de blocage (1) sauf le filetage (9) est de révolution par rapport à l'axe longitudinal (2).

9. Dispositif (20) destiné à bloquer une ligne de raccordement (21) et en assurer le contact électrique, en particulier une ligne de raccordement à fil fin d'un transformateur, et comportant un corps de blocage (23) et une vis de blocage (1) suivant l'une des revendications 1 à 8, le corps de blocage (23) comportant au moins une ouverture (24) pour visser la vis de blocage (1).

10. Dispositif (120) selon la revendication 9, **caractérisé en ce que** le corps de blocage (123) comporte au moins deux ouvertures (124), de préférence à angle droit l'une par rapport à l'autre, qui sont toutes deux adaptées pour visser la vis de blocage (1), la ligne de raccordement (121) pouvant être engagée dans une première ouverture (124) et y être bloquée à l'aide de la vis de blocage (1) vissée dans la deuxième ouverture.
